# EUROPEAN PATENT SPECIFICATION

(11) **EP 3 808 862 B1**
(45) Date of publication and mention of the grant of the patent: **26.03.2025**
(21) Application number: 19306358.3
(22) Date of filing: 18.10.2019
(51) Int. Cl.: C22B 4/00, C22B 4/08, C22B 7/00, H05H 1/00

(54) **TREATMENT OF A COMPOSITION WITH A PLASMA**
BEHANDLUNG EINER ZUSAMMENSETZUNG MIT EINEM PLASMA
TRAITEMENT D'UNE COMPOSITION À L'AIDE D'UN PLASMA

(43) Date of publication of application: 21.04.2021
(73) Proprietor: Paris Sciences et Lettres, 75006 Paris (FR); Centre National de la Recherche Scientifique, 75016 Paris (FR); Ecole Nationale Superieure de Chimie de Paris, 75005 Paris (FR)
(72) Inventor: ROUSSEAU, Frédéric, 51260 Esclavolles-Lurey (FR); CRAMER, Jonathan, 77600 Conches sur Gondoire (FR); PRIMA, Frédéric, 78120 Rambouillet (FR); MORVAN, Daniel, 75005 Paris (FR)
(74) Representative: Ipsilon

(56) References cited:
- EP-A1- 3 434 080
- EP-B1- 3 434 080
- WO-A1-2017/211994
- US-B2- 7 229 485
- A.R DAYAL ET AL: "Application of Pulsed Traveling Hydrogen Arcs for Metal Oxide Reduction", PLASMA CHEMISTRY AND PLASMA PROCESSING, 1 December 2003 (2003-12-01), New York, pages 627 - 649, XP055680595, Retrieved from the Internet <URL:https://link.springer.com/content/pdf/10.1023/A:1025506326697.pdf> DOI: 10.1023/A:1025506326697

## Description

The invention relates to a process for treating a composition with a plasma, a reactor for treating a composition with a plasma and a process for capturing a compound contained in a plasma.

The production and consumption of devices comprising material such as electronic components, plastic material and/or metallic material constantly increase worldwide. For ecological reasons and because such materials may be valuable and/or toxic, methods have been developed to recycle devices comprising such materials.

The recycling of devices may be difficult, especially when the devices comprise a mixture of different materials. In particular, electronic devices such as laptops, phones, computers, vehicles, solar panel..., comprise a mixture of metals, heavy metals, resin, polymers and other components.

The conventional recycling methods generally involve a succession of hydrometallurgic and/or pyrometallurgic operations. However, such operations are highly energy-consuming, generate pollutants gases and/or lead to soil and water contamination with for example heavy metals.

Moreover, hydrometallurgic and/or pyrometallurgic operations are set up for a specific type of material and are not easily adaptable to other types of materials or materials having a different composition.

Further, hydrometallurgic and/or pyrometallurgic operations do not allow to extract and recover successively and/or selectively different types of components from a waste material. Therefore, these methods do not allow, for example, to recover selectively and with a high purity degree, the different components of a device such as, for example, an electronic device.

Recently, methods have been developed to recycle compounds from a matrix using a thermal plasma. A plasma is a particular state of matter which may comprise a mixture of ions, electrons, radical species, neutral atoms and/or neutral molecules. Due to its composition, a plasma is highly electrically conductive and possesses specific properties compared to the other states of matter (solid, liquid and gas). A plasma may be generated by submitting neutral gas to microwaves, to a strong electric field or to an electromagnetic field, until said neutral gas becomes partially or fully ionized. A non-equilibrium plasma (also called "cold plasma") is initially formed thanks to the latter process and by further energizing this non-equilibrium plasma, an equilibrium plasma (also called "thermal plasma") is then generated.

A non-equilibrium plasma is a plasma which is not at thermodynamic equilibrium because the electrons temperature is higher than the temperature of heavy species such as ions, and neutral atoms and/or molecules. Such a non-equilibrium plasma is generally obtained at a pressure comprised between 100 to 10 000 Pascal (Pa).

In an equilibrium plasma or thermal plasma, on the contrary, all the species (electrons, radicals, ions...) are at the same temperature. Such a thermal plasma is generally obtained at a pressure higher than 10 000 Pascal (Pa). A thermal plasma is more energetic and exhibit a higher temperature than a non-equilibrium plasma and is therefore the type of plasma that is used for example to recycle compounds from a matrix.

However, it is difficult to control the temperature of a thermal plasma once formed and such a process does not allow, for example, to extract, with a satisfactory yield, metals or metal complexes which are thermal sensitive. Moreover, the compounds that are extracted with a thermal plasma may be contaminated by residues, for example organic or inorganic residues, contained in the matrix as such a process is not selective.

WO 2017/211994 A1 discloses a process for selectively and continuously extracting a series of desired species from a matrix, said process comprising notably the step of injecting a plasma in an extraction chamber by means of a plasma torch, the matrix being disposed on a support within the extraction chamber.

US 7 229 485 B2 discloses a process for the reduction of a metalliferous ore or concentrate using a non-equilibrium plasma.

EP 3 434 080 A1 discloses a cold plasma device for treating a surface with cold plasma, the device comprising:
- a cold plasma generator adapted to generate cold plasma that produces reactive species for treating said surface;
- a treatment head positionable relative to said surface such that said reactive species are imparted toward said surface during treatment;
- an air flow generator configured to generate an air flow over said surface; and
- a controller configured to control operation of the air flow generator to generate an air flow over said surface after said treatment of said surface has been completed such that remaining by-products of the cold plasma are dissipated.

FR2947814 discloses a process for surface cleaning by non-equilibrium plasma at pressure between 5 and 500 Pa.

Therefore, there still exists a need for methods allowing to overcome at least one of the drawbacks of the prior art methods and allowing, in particular, to recover selectively and with an satisfactory purity compounds from a composition comprising different materials.

An object of the invention is a process for treating, with a plasma, a composition comprising at least a first compound and a second compound, characterized in that said process comprises at least:
- generating, within an enclosure, a non-equilibrium plasma flow from a gas present in said enclosure by maintaining the pressure within the enclosure below 10 000 Pa, and
- treating the composition contained in said enclosure with said non-equilibrium plasma flow so as to extract at least a portion of said first compound,

wherein the extracted first compound is in a gaseous state and is captured in a liquid or solid state in a carbon felt traversed by the non-equilibrium plasma flow comprising said extracted first compound,
wherein the temperature of the carbon felt is lower than the condensation point or lower than the solidification point of the first compound.

The process for treating the composition being performed with a non-equilibrium plasma, it is thus possible to control the temperature of said plasma. By controlling the temperature of the plasma, it is for example possible to control the vapor pressure of the first and second compounds. This process therefore allows to selectively extract, at least partially, the first compound from the composition, in particular by influencing the difference in the boiling temperature and/or vapor pressure between the first and second compounds. By extracting the first compound from the composition, the process allows to separate, at least partially, the first compound from the second compound which remains in the composition. In this process, the first compound is different than the second compound. As the non-equilibrium plasma is less energetic than an equilibrium plasma, the composition may be treated while minimizing or even avoiding deterioration/degradation of the composition, in particular avoiding deterioration/degradation of the first and second compounds. Deterioration/degradation of a compound means here that the structure of said compound has been modified in such a manner that this compound cannot be recovered under his initial form or as a derivative, and is not valuable or usable anymore.

During the process, the compound may be extracted under its initial form or under the form of one of its derivatives. When the first compound is extracted under the form of one of its derivatives, the latter may be generated by reaction of the non-equilibrium plasma with said first compound or by reaction between the first and the second compounds, said reaction being induced by the non-equilibrium plasma. In a preferred embodiment, the first compound may be totally extracted from the composition.

After extracting partially or totally the first compound from the composition, the second compound remains in the composition and the composition is therefore enriched in the second compound. The second compound may remain in the composition under its initial form or under the form of one of its derivatives. When the second compound remains in the composition under the form of one of its derivatives, the latter may be generated by reaction of the non-equilibrium plasma with said second compound or by reaction between the first and the second compound, said reaction being induced by the non-equilibrium plasma.

Within the frame of the present description, a derivative of a compound is defined for example as a reduced, oxidized, halogenated, in particular chlorinated, form of the compound. In particular, a derivative is a form of a compound in which the compound is still valuable and usable. A derivative is a form of a compound from which the compound may be recovered under its initial form or under the form of another derivative. A derivative of a compound is therefore different from the product(s) obtained by deterioration/degradation of said compound.

According to a first embodiment, the first compound may be an impurity and the second compound may be a compound of interest. According to this embodiment, the treatment of the composition with the non-equilibrium plasma may allow to extract or remove at least a portion of the first compound, i.e. the impurity, from the composition, and therefore to enrich the composition with the second compound, i.e. the compound of interest. In a preferred embodiment, the first compound may be totally extracted from the composition and at the end of the process, the second compound may be recovered in a purified state.

Within the frame of the present description, a compound is considered pure when the compound comprises not more than 10% by weight, preferably not more than 5% by weight, and more preferably not more than 3% by weight of impurities over the total weight of the compound.

According to a second embodiment, the first compound may be a compound of interest and the second compound may be an impurity. According to this embodiment, the treatment of the composition with the non-equilibrium plasma may allow to extract the compound of interest in a purified state while leaving the impurity inside the enclosure as a residue of the composition. In a preferred embodiment, the first compound may be totally extracted and at the end of the process, the whole first compound may be recovered in a purified state.

According to a third embodiment, the first compound may be a first compound of interest and the second compound may be a second compound of interest. According to this embodiment, the treatment of the composition with the non-equilibrium plasma may allow to extract or remove at least a portion of the first compound of interest and therefore to enrich the composition in the second compound of interest. In a preferred embodiment, the first compound of interest may be totally extracted and at the end of the process, the second compound of interest may be recovered in a purified state inside the enclosure. According to this preferred embodiment, the process allows to separate the first and the second compounds of interest.

The first compound may be chosen for example among a metal, a metal derivative, an alloy of two or more metals, a polymer, an organic compound, and a resin. When the first compound is a metal, the metal may be chosen for example among tin (Sn), copper (Cu), tantalum (Ta), iron (Fe), silver (Ag), manganese (Mn), gold (Au), palladium (Pd), lithium (Li), cobalt (Co) and magnesium (Mg).

The second compound may be chosen for example among a metal, a metal derivative, an alloy of two or more metals, a polymer, an organic compound and a resin. When the second compound is a metal, the metal may be chosen for example among tin (Sn), copper (Cu), tantalum (Ta), iron (Fe), silver (Ag), manganese (Mn), gold (Au), palladium (Pd), lithium (Li), cobalt (Co) and magnesium (Mg).

In a preferred embodiment, at least one of the first and second compounds may be a metal, a metal derivative, or an alloy of two or more metals.

According to another embodiment, the composition may comprise three or more compounds. Each the first, second and third embodiments may apply regardless the number of compounds in the composition.

When the composition comprises three or more compounds, each of said three or more compounds may be chosen among a metal, a metal derivative, an alloy of two or more metals, a polymer, an organic compound and a resin. When said three or more compounds comprise one or more metals, the metal may be chosen among tin (Sn), copper (Cu), tantalum (Ta), iron (Fe), silver (Ag), manganese (Mn), gold (Au), palladium (Pd), lithium (Li), cobalt (Co) and magnesium (Mg).

Within the frame of the description, a metal refers to the atomic form of such metal and a metal derivative or metal alloy refers to a molecular form of said metal.

According to still another embodiment, the process may be used to extract selectively different compounds from a composition. According to this embodiment, the composition may comprise n different compounds and the process may be performed (n-1) times. Each time the process is performed, one compound among the n compounds may be extracted from the composition through the non-equilibrium plasma flow. Once the process has been performed n-1 times, the last compound may remain in the enclosure.

Various operating parameters may be controlled to perform the process.

A first operating parameter may be the type of gas present within the enclosure.

According to an embodiment, gas that is present in the enclosure may comprise at least one inert gas. According to this embodiment, the gas present within the enclosure may be chosen among argon (Ar), helium (He), nitrogen (N₂), and one of their mixtures. The non-equilibrium plasma that is generated from a gas comprising an inert gas or a mixture of inert gas, may comprise reactive species. The reactive species may comprise electrons, ions and/or radical species.

The flow rate of the inert gas injected into the enclosure may range from 1 to 5000 ml/min, preferably from 50 to 2000 ml/min, more preferably from 100 to 1000 ml/min.

Treatment of the composition with a non-equilibrium plasma comprising reactive species may allow for example to induce a chemical reaction between the first and the second compounds. According to this exemplary embodiment, the first compound may be extracted under the form of one of its derivatives. According to another exemplary embodiment, treatment of the composition with a non-equilibrium plasma comprising reactive species may allow to extract the first compound by vaporization.

According to another embodiment, the gas present in the enclosure may comprise at least one inert gas and may further comprise at least one additional reactive gas. According to this embodiment, the at least one additional reactive gas may be chosen among O₂, H₂O, H₂, NH₃, N₂, Cl₂, Br₂, I₂ or the like, and one of their mixtures. According to this embodiment, the non-equilibrium plasma generated from such a gas may comprise reactive species and additional reactive species.

Treatment of the composition with a non-equilibrium plasma comprising additional reactive species may allow to extract the first compound under its initial form and leave the second compound in the enclosure under the form of one of its derivatives, or extract the first compound under the form of one of its derivatives and leave the second compound in the enclosure under its initial form, or extract the first compound under the form of one of its derivatives and leave the second compound in the enclosure under the form of one of its derivatives.

The flow rate of the additional reactive gas may range from 20 to 2000 ml/min, preferably from 30 to 1000 ml/min, more preferably from 30 to 500 ml/min.

According to a preferred embodiment, when gas contained within the enclosure comprises at least one inert gas and at least one additional reactive gas, the flow rate of the inert gas may be higher than the flow rate of the additional reactive gas. Preferably, the flow rate of the additional reactive gas may represent 0.1 to 50% of the total gas flow rate, the total gas flow rate being the summation of the inert gas flow rate and the reactive gas flow rate.

In the process, the at least one inert gas and the at least one additional reactive gas may be injected into the enclosure by means of one or more injectors.

A second operating parameter may be the pressure inside the enclosure.

The enclosure may be maintained at a desired pressure by means of a pressure regulating device as second controlling device. Said pressure regulating device may be in communication with the enclosure through a second opening and may create a depression in the enclosure through said opening. The pressure regulating device may comprise, for example, a valve and a pump. Preferably, the pressure regulating device may allow to place the inside of the enclosure at a low pressure. By placing the inside of the enclosure at a low pressure a gas flow between the first opening and the second opening may be generated.

Maintaining the pressure below 10 000 Pa allows to maintain the plasma flow in a non-equilibrium state.

Further, controlling the pressure, in particular maintaining the pressure below 10 000 Pa, may allow to extract the first compound (or other compounds contained in the composition) by vaporization. Advantageously, a pressure maintained below 10 000 Pa allows to vaporize the first compound (or other compounds contained in the composition) at a lower temperature compared to a vaporization at atmospheric pressure. In other words, maintaining the pressure inside the enclosure below 10 000 Pa allows to decrease the boiling point of the compounds to be extracted. Advantageously, such a process allows to avoid deterioration/degradation of the compounds contained in the composition.

The pressure residing inside the enclosure before generating the non-equilibrium plasma from the gas present in the enclosure may range from 0.1 to 10 000 Pa, preferably from 1 to 3 500 Pa, and more preferably from 300 to 900 Pa.

A third operating parameter may be the state of matter injected inside the enclosure.

The matter injected inside the enclosure is in a gaseous state and a plasma may be generated by heating said gas or by submitting said gas to microwaves, to an electric field or to an electromagnetic field.

According to a preferred embodiment, the plasma may be generated by submitting said gas to an electromagnetic field, for example by using a radiofrequency generator as third controlling device. The radiofrequency generator may be connected, for example, to a coil arrangement or device comprising inductive wires surrounding the enclosure. Preferably, the coil arrangement or device is placed around a portion of the enclosure which may be located between the first opening and the second opening. According to this preferred embodiment, the radiofrequency generator generates a non-equilibrium plasma from the gas present in the enclosure by applying a power to the radiofrequency generator ranging from 500 to 6000 W, preferably from 500 to 3000 W, and more preferably from 500 to 2000 W. More particularly, the radiofrequency generator may generate a non-equilibrium plasma flow from the gas flow present in the enclosure. Preferably, the non-equilibrium plasma flow circulates from the portion of the enclosure surrounded by the coil arrangement or device to the second opening.

Once generated, the non-equilibrium plasma flow may have a temperature lower than 500 °C, preferably lower than 350°C, and more preferably lower than 250°C. Advantageously, such temperature is much lower than the temperature of a thermal plasma flow which is usually above 1000°C.

In a preferred embodiment, once the non-equilibrium plasma flow has been generated, the pressure inside the enclosure may be regulated during the process by the pressure regulating device so as to be maintained between 0.1 to 5000 Pa, preferably from 100 to 3500 Pa, and more preferably from 300 to 900 Pa. Therefore, the plasma flow is maintained at a non-equilibrium state in the course of the process, preferably along the whole duration of the process.

Advantageously, the pressure inside the enclosure being reduced, the boiling point of the compound(s) contained in the composition, and which has(ve) to be extracted, may be lowered and the extraction of said compound(s) may be favored. Such compound(s) may therefore be extracted at a lower temperature than with the thermal plasma.

Preferably, the radiofrequency generator may function or operate continuously until the end of the process, for example until the desired amount of first compound is extracted from the composition. Preferably, the same power may be applied to the radiofrequency generator during the whole process.

The power of the generated non-equilibrium plasma flow may range from 50 to 600 W, preferably from 50 to 300 W, and more preferably from 50 to 200W. The power of the non-equilibrium plasma may be controlled in particular by controlling the power of the radiofrequency generator.

According to a preferred embodiment, the composition may be arranged within the enclosure so as to be crossed by the non-equilibrium plasma flow, preferably between the portion of the enclosure surrounded by the coil arrangement or device and the second opening.

According to another embodiment, the composition may be placed on a support within the enclosure, the support being placed preferably between the portion of the enclosure surrounded by the coil arrangement or device and the second opening.

According to a preferred embodiment, the support may be a crucible, preferably a crucible able to be heated by induction such as a carbon crucible, in particular a crucible having a high density such as a carbon crucible having a density of 1.90 to 2.30, preferably 1.95 to 2.10, and more preferably of 2.03 to 2.07.

A fourth operating parameter may be the temperature of the support on which the composition is placed.

According to a possible embodiment, the temperature of the support, preferably the crucible, may not be modified and the composition placed on said support, may be at the temperature of the non-equilibrium plasma flow, preferably at a temperature lower than 500°C.

According to another possible embodiment, the temperature of the support, preferably the crucible, may be modified, in particular the support may be heated or cooled, by a fourth controlling device. According to this possible embodiment, the temperature of the composition may be heated or cooled depending on the temperature of the non-equilibrium plasma flow. According to this embodiment, the temperature of the composition may be different than the temperature of the non-equilibrium plasma flow, in particular it is higher or lower.

According to this embodiment, the temperature of the support may be heated or cooled by means of a heat exchanger, for example a circuit of heat transfer fluid which may be in contact with the support or may surround said support.

When the support is heated, the fourth controlling device may be a resistance heating/heat resistor which may be in contact with the support or may surround said support.

According to a preferred embodiment, when the support is heated, the fourth controlling device may be an electromagnetic induction generator. The electromagnetic induction may be applied for example on the support using a coil arrangement or device surrounding the enclosure, said coil arrangement or device being connected to an electromagnetic induction generator.

According to an exemplary embodiment, the temperature of the support, preferably the crucible, may be modified, i.e. heated or cooled by means of a heat exchanger, for example a circuit of heat transfer fluid which may be in contact with the crucible and/or may surround said crucible.

When the support is heated, the temperature of the crucible may be increased by means of one or more heating element(s), for example heating wire(s), heating resistance(s)..., which may be in contact with the crucible and/or may surround said crucible.

According to a preferred embodiment, when the support is heated, the temperature of the support may be increased by means of electromagnetic induction. Electromagnetic induction may be applied for example to the support using a coil arrangement or device surrounding the enclosure, said coil arrangement or device being connected to an induction generator.

Advantageously, heating or cooling the composition via heating or cooling the support, may allow to better control the extraction of the first compound. According to one exemplary embodiment, increasing the temperature of the composition may allow to melt the composition or one of the compounds of the composition so as to optimize its extraction. According to another embodiment, cooling the composition may allow to prevent the deterioration of thermosensitive compounds contained in the composition. According to still another embodiment, cooling the composition may allow to reduce the free enthalpy of a reaction between two compounds contained in the composition or between the reactive species of the plasma flow and a compound contained in the composition in order to promote this reaction, for example for the reduction of Ta₂O₅ to Ta by the plasma flow.

The heating or cooling of the support may be applied during the whole duration of the process or only during certain duration of the process.

Therefore, treating the composition with a non-equilibrium plasma may allow to control the process by adapting said process, in particular adapting operating parameters of the process, to the type of compounds contained in the composition and/or to the type of compounds to be extracted. In particular, operating parameters such as for example the power of the plasma, the pressure inside the enclosure and/or the temperature of the composition may be controlled. Such a control is not possible with an equilibrium or thermal plasma which by definition has a very high temperature that is very difficult to control.

According to an embodiment, the process may comprise the capture of the extracted first compound, for example by a carbon felt (as described in the following description) traversed by the non-equilibrium plasma flow comprising said extracted first compound.

In an exemplary embodiment, the composition may comprise two or more compounds to be extracted. According to this embodiment, the process for treating the composition may be performed successively for each compound. Advantageously, the operating parameters may be controlled for each iteration or performance of the process. For example, the operating parameters from one iteration or performance to the other may be the same or may differ by one or more operating parameter(s).

According to an embodiment, the process may comprise a pretreatment of the composition before treating the composition with a non-equilibrium plasma flow. The pretreatment may not involve any plasma and may be, for example, a pretreatment process where the support is heated while the enclosure is at a reduced pressure, said pretreatment process allowing to vaporize one or more compounds of the composition.

According to another embodiment, the enclosure may, for example, be part of a reactor, preferably a cylindrical reactor, with transparent wall(s), for example quartz wall(s). Preferably, the wall(s) may allow an operator placed outside the enclosure to visually monitor the inside of the enclosure. The process may thus be visually controlled by, for example, visualizing color changes in the composition, filing of the carbon felt with extracted compounds. Advantageously, quartz is not heated by induction and quarts wall(s) therefore remain at low temperature during the process.

This process may be used purify, recycle and/or transform devices such as electronic components (phones, computers...); plastic materials; condensators; battery; solar panel; computers; bulb, especially LED bulb or low-energy bulbs; metallic materials; glass; minerals to be refined and the like.

Another object of the invention is a process for capturing at least one compound, characterized in that it comprises:
- generating a non-equilibrium plasma flow comprising said at least one compound in a gaseous state, the generated non-equilibrium plasma flow being obtained at a pressure maintained below 10 000 Pa,
- capturing said at least one compound through a carbon felt crossed by said non-equilibrium plasma flow, the temperature of said carbon felt being at a temperature T1 at which said compound is in a liquid or solid state, and
- recovering said at least one compound from the carbon felt by rinsing said carbon felt or destructing said carbon felt.

The process for capturing a compound may be applied to a non-equilibrium plasma flow and to an equilibrium (or thermal) plasma flow. The compound contained in the plasma flow may be under a gaseous form due to its extraction or vaporization from a composition, for example using a plasma flow.

The compound contained in the plasma flow may be chosen for example among a metal, a metal derivative, an alloy of two or more metals, a polymer, an organic compound and a resin. When the first compound is a metal, the metal may be chosen among tin (Sn), copper (Cu), tantalum (Ta), iron (Fe), silver (Ag), manganese (Mn), gold (Au), palladium (Pd), lithium (Li), cobalt (Co) and magnesium (Mg).

Advantageously, the temperature of the carbon felt may be lower than the boiling point of the compound contained in the plasma flow and said compound may be captured by the carbon felt as a liquid or as a solid. In a preferred embodiment, the whole plasma flow comprising the compound may necessary cross the carbon felt and the total amount of the compound contained in the plasma flow may be captured by the carbon felt.

According to an embodiment, the dimensions and the volume of the carbon felt may be adapted to the amount of compound present in the plasma flow.

According to another embodiment, the carbon felt may have a porosity of at least 30%, preferably of at least 40%, more preferably of at least 50%.

The carbon felt may be electrically conductive or may not be electrically conductive.

The compound captured by the carbon felt is recovered or isolated by rinsing the carbon felt or by destroying said carbon felt.

In a first exemplary embodiment, the carbon felt comprising the captured compound may be rinsed by a solvent such as for example water, acid solvent, basic solvent, alcohol (for example ethanol), acetone and the like. When rinsing of the carbon felt has been achieved, the solvent contains the captured compound which may then be recovered or isolated by evaporating said solvent. According to this exemplary embodiment, the carbon felt may be reused in another process for capturing a compound.

In a second exemplary embodiment, the carbon felt comprising the captured compound may be treated by a non-equilibrium plasma according to the previously described process for treating a composition, said plasma comprising oxygen (O₂) as additional reactive gas. With such a process, the carbon felt may be extracted under the form of carbon dioxide (CO₂) and the captured compound may be recovered in a pure form.

In a third exemplary embodiment, the carbon felt comprising the captured compound may be treated by a non-equilibrium plasma according to the previously described process for treating a composition, said plasma comprising hydrogen (H₂) as additional reactive gas. With such a process, the carbon felt may be extracted under the form of methane (CH₄) and the captured compound may be recovered in a pure form.

Advantageously, the method for recovering the captured compound contained in the carbon felt may be chosen depending on the type of captured compound (metal, metal derivative, organic compound...), i.e. the type of compound contained in the plasma flow crossing the carbon felt. The method for recovering the captured compound may also be chosen depending on the sensitivity of said captured compound to solvent, temperature...

According to another embodiment, the plasma flow may comprise more than one compound. According to this embodiment, all the compounds contained in the plasma flow may be captured in the carbon felt or only some of the compounds may be captured in the carbon felt.

According to still another embodiment, the process may be stopped to change to carbon felt and the process may be restarted with the same operating parameters or with different operating parameters once the carbon felt has been changed. According to an example of this embodiment, the carbon felt may be changed because it is full of the extracted compound and the process may be restarted with a new carbon felt to continue capturing the same compound. According to another example of this embodiment, the carbon felt may be changed to capture a different compound with a new carbon felt.

According to one embodiment, the process for capturing a compound may be used in the previously described process for treating a composition. According to this embodiment, the carbon felt may be placed between the support for the composition to be treated and the second opening of the enclosure, so as to be crossed by the non-equilibrium plasma flow. Therefore, when the compound is extracted from the composition, the non-equilibrium plasma flow conveys said extracted compound before and during the crossing of the carbon felt. Still according to this embodiment, the whole non-equilibrium plasma flow comprising the extracted compound may necessary cross the carbon felt and the total amount of the extracted compound may be captured by the carbon felt.

Another object of the invention is a reactor for performing the process for treating, with a plasma, a composition comprising at least a first compound and a second compound as defined above, characterized in that it comprises:
- an enclosure containing the composition,
- a generation device configured to generate a non-equilibrium plasma flow from a gas present within said enclosure so that said plasma gas flow comes into contact with the composition with a view to treating said composition,
- one or more controlling devices configured to control one or more operating parameters of the reactor so as to maintain the plasma flow at said non-equilibrium state, one of the controlling device being a pressure regulating device configured to maintain the pressure within the enclosure below 10 000 Pa, and
- a carbon felt configured to capture at least one compound or one of its derivatives, extracted from the composition by the non-equilibrium plasma flow.

This reactor allows to treat the composition with a non-equilibrium plasma flow, i.e. with softer conditions compared to an equilibrium (or thermal) plasma.

A first possible operating parameter may be the type of gas present within the enclosure.

According to an embodiment, the gas that is present within the enclosure may comprise at least one inert gas and may optionally comprise an additional reactive gas. According to this embodiment, the enclosure may comprise a first opening which is in communication with a first controlling device configured to introduce gas into said enclosure. The first controlling device may allow to inject the inert gas and optionally the additional reactive gas into the enclosure. The first controlling device may comprise for example one or more tanks in which inert gas and additional reactive gas are stored under compressed gas or liquid form, and an expander for generating a flow of gas from the tank.

According to another embodiment, the enclosure may comprise a second opening that is in communication with a second controlling device configured to create a depression in the enclosure through said second opening. The second controlling device may be for example a pressure regulating device such as a vacuum pump.

Advantageously, by regulating the pressure inside the enclosure using the second controlling device, the pressure inside the enclosure may be maintained at a pressure ranging from 0.1 to 10000 Pa so as to maintain the plasma flow at a non-equilibrium state.

According to a further embodiment, the reactor may comprise a third controlling device which may be a plasma generator. The plasma generator may generate the plasma by heating the gas present within the enclosure or by submitting said gas to a magnetic field. According to a preferred embodiment, the plasma may be generated by submitting said gas to microwaves, to an electric or to an electromagnetic field.

When the plasma is generated by submitting said gas to an electromagnetic field, the third controlling device may be a radiofrequency generator. The radiofrequency generator may be connected, for example, to a coil arrangement or device comprising inductive wires surrounding the enclosure. Preferably, the coil arrangement or device is placed around a portion of the enclosure which may be located between the first opening and the second opening. According to this preferred embodiment, the radiofrequency generator may generate a non-equilibrium plasma from the gas present in the enclosure by applying a power to the radiofrequency generator ranging from 500 to 6000 W, preferably from 500 to 3000 W, and more preferably from 500 to 2000W. More particularly, the plasma generator generates a non-equilibrium plasma flow from the gas flow present in the enclosure.

According to still another embodiment, the composition may be placed on a support and the reactor may comprise a temperature regulating device configured to regulate the temperature of said composition by controlling the temperature of said support. According to a preferred embodiment, the support may be a crucible, preferably a carbon crucible. Still according to a preferred embodiment, the temperature of the support may be controlled.

According to an embodiment, the reactor may comprise a fourth controlling device allowing to control the temperature of the support, preferably the crucible. According to this embodiment, the temperature of the support may be heated or cooled by means of a heat exchanger, for example a circuit of heat transfer fluid which may be in contact with the support or may surround said support.

When the support is heated, the fourth controlling device may be a resistance heating/heat resistor which may be in contact with the support or may surround said support.

According to a preferred embodiment, when the support is heated, the fourth controlling device may be an electromagnetic induction generator. The electromagnetic induction may be applied for example on the support using a coil arrangement or device surrounding the enclosure, said coil arrangement or device being connected to an electromagnetic induction generator.

According to another embodiment, the non-equilibrium plasma flow may circulate between the first and the second openings under the action of the depression created through the second opening. The support is located between the first and the second openings so as to be fully exposed to the non-equilibrium plasma flow.

According to still another embodiment, the enclosure may comprise a carbon felt (in particular a graphite felt) configured to capture at least one compound contained in the non-equilibrium plasma flow. Preferably, the carbon felt may be placed between the support for the composition and the second opening of the enclosure so as to be crossed by the non-equilibrium plasma flow.

According to a preferred embodiment, the reactor may be used to perform the process of treatment of a composition previously described.

### FIGURES

Other features and advantages will become apparent during the course of the following description given solely by way of nonlimiting example and made with reference to the attached drawing, in which:

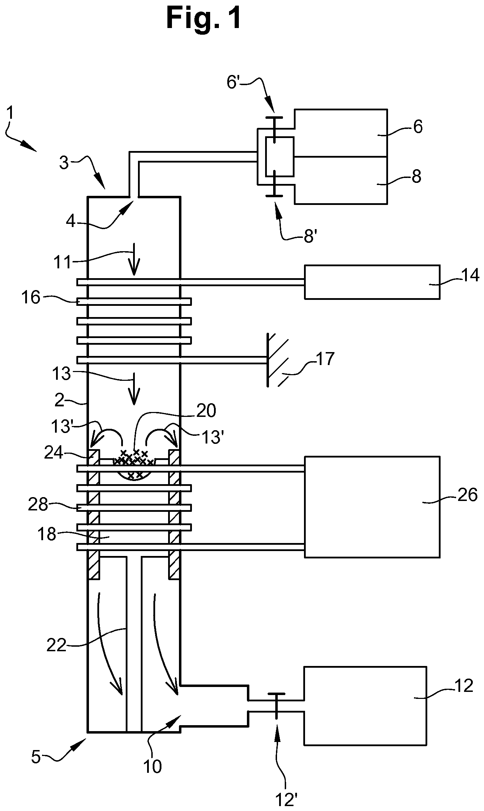

- Figure 1 is a schematic view of a reactor for treating a composition with a plasma.

As depicted in Figure 1, the reactor 1 comprises an enclosure 2 which is cylindrical and made of quartz. The enclosure is transparent to allow an operator placed outside the enclosure to visually monitor the inside of the enclosure 2 when a process is performed inside said enclosure 2, such a process may be the previously described process for treating a composition or a the previously described process for capturing a compound.

In operation, the enclosure 2 is vertically oriented as shown in Figure 1.

In other possible embodiments, the enclosure may have other forms, preferably elongated. Other materials than quartz may alternatively be used for the enclosure to the extent that said materials are able to withstand a reduced pressure.

At a first end 3, the enclosure 2 comprises a first opening 4 which is in communication with a first tank 6 containing an inert gas and a second tank 8 containing an additional reactive gas.

The reactor 1 comprises a first regulating valve 6' allowing to regulate the flow rate of inert gas to be introduced into the enclosure 2 through the first opening 4. The reactor 1 also comprises a second regulating valve 8' allowing to regulate the flow rate of additional reactive gas to be introduced into the enclosure 2 through the first opening 4.

At a second end 5, opposite to the first end 3, the enclosure comprises a second opening 10 which is in communication with a vacuum pump 12. The vacuum pump 12 allows to reduce the pressure inside the enclosure by means of a third regulating valve 12'.

The injection of inert gas, and optionally of additional reactive gas, into enclosure 2 while the vacuum pump is functioning/operating allows to generate an inner flow of gas 11 (inert gas and optionally additional reactive gas) between the first opening 4 and the second opening 10.

The reactor 1 also comprises a radiofrequency generator 14 operating at 40 MHz or at a lower frequency and at a power of 500 to 6000 W. The radiofrequency generator 14 is connected to a coil arrangement or device comprising here inductive wires 16 which are connected to a power supply 17. The inductive wires 16 surround an external portion of the enclosure that is located downstream the first opening along the gas flow 11.

The radiofrequency generator 14 is configured to apply an electromagnetic field on the flow of gas 11 by means of inductive wires 16 in order to generate a plasma flow 13 having a power ranging from 50 to 600 W. In the case where the vacuum pump 12 maintains a pressure that is lower than 10 000 Pa, the plasma flow 13 is maintained at a non-equilibrium state.

According to other possible embodiments, the plasma flow may be generated by any other type of generator such as electromagnetic field generator or microwaves generator.

The reactor 1 also comprises a carbon crucible 18 located inside the enclosure 2 and on which a composition 20 (comprising a first and a second compound) to be treated with a plasma may be placed. The carbon crucible 18 is maintained by means of a leg 22 in alumina. The leg 22 is fixed to the inner side of the enclosure 2 and for example rests against the second end 5 that forms here the bottom of the enclosure. The carbon crucible 18 is located downstream the coil arrangement or device 16 so as to receive the generated plasma flow 13.

The reactor also comprises an electromagnetic induction generator 26 functioning at a frequency of 15-35 kHz and able to provide a power ranging from 1 kW to 6 kW. The electromagnetic induction generator 26 is connected to a coil arrangement or device 28 located outside a portion of the enclosure 2 that surrounds the crucible 18. The electromagnetic induction generator 26 allows to heat the crucible 18 and thus the composition 20 at a desired temperature.

According to other possible embodiments, the crucible may be heated or cooled by means of a heat exchanger, or heated by one or more heating element(s), for example heating wire(s), heating resistance(s) and the like.

A carbon felt 24, e.g. in the form of a cylinder, surrounds the carbon crucible 18, and is placed within the enclosure so as to fill in the volume located between the carbon crucible 18 and the wall of the enclosure 2.

When, for example, the process for treating composition 20 is ongoing, the plasma flow 13 comes into contact with composition 20, which allows to extract the first compound therefrom. In particular, the non-equilibrium plasma flow 13 conveys the first compound in a gaseous state. The non-equilibrium plasma flow 13 carrying the gaseous first compound forms a resulting non-equilibrium plasma flow 13' that cross the carbon felt 24.

Due to its composition, the carbon felt 24 is not heated by the non-equilibrium plasma flow 13' or by the electromagnetic induction generator 26 heating the crucible 18. Therefore, the carbon felt 24 allows to capture the first compound (which was previously extracted from composition 20 in a gaseous state) in a liquid or solid state.

This change in state of the first compound is due to the temperature of the carbon felt which is lower than the condensation point or lower than the solidification point of the first compound.

The captured first compound may then be recovered by the process previously described.

As represented in Figure 1, the controlling devices 6, 8, 14, 26 and 12 are external to the enclosure and may be removably connected thereto.

### EXEMPLES

The plasma generator is a radiofrequency generator which operates at a frequency of 40 MHz and with an electric power ranging from 500 to 6000 W to generate a plasma discharge ranging from 50 to 600 W.

The induction generator functions at a frequency ranging from 15-35 kHz and is able to provide a power ranging from 1 kW to 6 kW.

The support is a carbon crucible having a density of 2.05 g/cm³ and the carbon felt has a porosity of 88 ± 2 %.

### Example 1

2 g of a composition A comprising 70 % by weight of copper (Cu) as first compound and 30 % by weight of tin (Sn) as second compound over the total weight of the composition was placed on the crucible.

The vacuum pump was started to reduce the pressure within the enclosure and argon (Ar) as inert gas was introduced into the enclosure with a flow rate of 300 mL/min. The pressure at this stage was of 800 Pa.

The electromagnetic induction generator was started at a power of 2 kW for 400 seconds (s) allowing to heat the support, and thus the composition, at a temperature of 1080°C at which the composition was melted. At this stage, the pressure inside the enclosure was of 1200 Pa.

Then, the radiofrequency generator was started at a power of 2000 W and oxygen (O₂) as additional reactive gas was introduced into the enclosure at a flow rate of 100 mL/min during 20 s. A non-equilibrium plasma flow having a power of 200 W was generated comprising reactive species (generated from argon (Ar)) and additional reactive species (generated from the oxygen (O₂)).

Instantaneously, the carbon felt was covered with a white powder of tin oxide (SnO₂) which is a derivative of the first compound.

All the controlling devices were then stopped and the carbon felt was removed from the enclosure and weighed. The weight of the white powder contained in the carbon felt was of 23 mg. Analysis by X-ray diffraction XRD) showed that the extracted compound comprised 93 % by weight of tin oxide (SnO₂) and 7 % by weight of copper (Cu), over the total weight of the extracted compound.

In this example, the process for treating the composition was stopped before the end of the process. However, the process could have been extended to extract the totally of tin under the form of tin oxide (SnO₂).

### Example 2

An ingot of 2 g of tin (Sn) as first compound was placed on the crucible and a tablet of 1 g of copper chloride (CuCl₂) as second compound was placed below said tablet.

The vacuum pump was started to reduce the pressure within the enclosure and argon (Ar) as inert gas was introduced into the enclosure with a flow rate of 300 mL/min. The pressure at this stage was of 800 Pa.

Then, the radiofrequency generator was started at a power of 2000 W to generate a non-equilibrium plasma flow at 200W comprising reactive species (generated from argon (Ar)).

In this example, the temperature of the crucible was not modified and the composition was therefore at the temperature of the non-equilibrium plasma flow which is lower than 400°C at the end of the treatment.

The composition was therefore treated with the non-equilibrium plasma flow and after 300 s, the tin (Sn) was melted and the copper chloride (CuCl₂) was embedded into it.

After 40 more seconds, the first and the second compounds were allowed to react together, and the carbon felt was covered with a white powder of tin chloride (SnCl₂) which is a derivative of the first compound.

All the controlling devices were then stopped and the carbon felt was removed from the enclosure and weighed. The weight of the white powder was of 45 mg. Analysis using Energy-dispersive X-ray spectroscopy (EDX) showed that the extracted compound comprised 90 % by weight of tin chlorine (SnCl2) and 10 % by weight of copper (Cu + CuCl) over the total weight of the extracted compound.

### Example 3

A composition of eight used condensators comprising an organic fraction, a ceramic fraction, and a metallic fraction was placed on the crucible.

The composition was first submitted to a preparation step to remove the organic fraction by pyrolysis and without using any plasma flow.

The vacuum pump was started to reduce the pressure within the enclosure and argon (Ar) as inert gas was introduced into the enclosure with a flow rate of 300 mL/min. The pressure at this stage was of 530 Pa.

The electromagnetic induction generator was started at a power of 1 kW for 120 seconds (s) allowing to heat the condensator and thus to realize the pyrolysis of the organic fraction which were extracted from the composition under gaseous (CHx, COx) and oil form.

After this preparation step, the crucible contained the ceramic fraction and the metallic fraction. Both fractions were crushed and separated by magnetism.

EDX analysis showed that:
- the crushed ceramic fraction contained mainly silicon (Si + SiO₂), carbon (C), tantalum (Ta° + Ta₂O₅) and manganese (Mn° + MnO + MnO₂), under the form of oxides or metals, and
- the crushed metallic fraction contained mainly iron (Fe), copper (Cu), tin (Sn) and a small amount of silver (Ag), under the form of metals.

In this example, only the crushed metallic fraction was not treated by plasma.

The crushed ceramic fraction was sieved to eliminate silica (SiO₂), carbon (C) and to recover a composition comprising manganese (MnO + MnO₂) as first compound and a mixture of tantalum (Ta° + Ta₂O₅) as second compound. This composition was then submitted to the treatment with non-equilibrium plasma.

The composition was placed on the crucible.

The vacuum pump was started to reduce the pressure within the enclosure and argon (Ar) as inert gas was introduced into the enclosure with a flow rate of 300 mL/min. The pressure at this stage was of 750 Pa.

The electromagnetic induction generator was started at a power of 1 kW for 300 seconds (s) allowing to heat the crucible, and thus the composition, at a temperature of at most 850°C.

Then, the radiofrequency generator was started at a power of 2000 W and hydrogen (H₂) as additional reactive gas was introduced into the enclosure at a flow rate of 120 mL/min during 120 s. A non-equilibrium plasma flow of 200 W was then generated comprising reactive species (generated from argon (Ar)) and additional reactive species (generated from hydrogen (H₂)).

The process allowed to extract the totality of manganese (first compound) which was captured by the carbon felt under the form of Mn° + MnO₂. The second compound which was reduced by the non-equilibrium plasma flow, i.e. tantalum under his metallic form, was recovered in the crucible at a purity of 99,2 % by weight, the rest being 0.8 % by weight of Mn° over the total weight of the second compound.

### Example 4

A composition comprising 500 mg of a sulfur (S) powder (average diameter of 1 µm) as first compound and 200 mg of a tantalum oxide (Ta₂O₅) powder (average diameter of 200 nm) as second compound was placed in the crucible.

The vacuum pump was started to reduce the pressure within the enclosure and argon (Ar) as inert gas was introduced into the enclosure with a flow rate of 300 mL/min. The pressure at this stage was of 400 Pa.

The electromagnetic induction generator was started at a power of 1 kW for 30 seconds (s) allowing to heat the support, and thus the composition, at a temperature of 500°C.

After 30 s of operation, the sulfur was totally extracted and the carbon felt was covered with a yellow powder of sulfur (S) and the operating parameters were maintained for 10 more seconds. Then, the electromagnetic induction and the radiofrequency generator were stopped.

At this stage, the second compound remained in the crucible under its initial form of tantalum oxide (Ta₂O₅) (white powder) and the temperature of the crucible is about 400 °C (i.e. at the temperature of the non-equilibrium plasma used to extract the sulfur (S)).

The flow rate of argon (Ar) was then maintained allowing to decrease the temperature of the crucible, and thus the temperature of the composition, at 250 °C after 1 min.

Then, the radiofrequency generator was started at a power of 180 W and hydrogen (H₂) as additional reactive gas was introduced into the enclosure at a flow rate of 50 mL/min during 2 min. A non-equilibrium plasma flow was thus generated comprising reactive species (generated from argon (Ar)) and additional reactive species (generated from the hydrogen (H₂)).

The temperature of the crucible then increased with a rate of 30°C / min.

After 2 min the tantalum oxide (Ta₂O₅) powder was covered with tantalum (under its metal form), the reduction being performed thanks to the additional reactive species of hydrogen generated from hydrogen (H₂).

The process was stopped and a mixture of 91% by weight of tantalum oxide (Ta₂O₅) and 9% by weight of tantalum metal (Ta) over the total weight of the mixture was obtained in the crucible. The powder of tantalum oxide (Ta₂O₅) initially white turned grey due to the formation of tantalum metal (Ta). The process may have been pursued to obtain only tantalum metal (Ta) on the crucible.

### Example 5

In this example, a special carbon crucible equipped with an internal circuit of heat transfer fluid (air or water for example) was used. This internal cooling channel allowed to cool the crucible during the process.

The same composition of example 4 was placed in the crucible.

The sulfur was extracted according to the process described in example 4 and at the end of the sulfur, extraction, the temperature of the crucible is about 400 °C (i.e. at the temperature of the non-equilibrium plasma used to extract the sulfur (S)).

The flow rate of argon (Ar) was then maintained allowing to decrease the temperature of the crucible. To further decrease the temperature of the crucible, a circulation of air was set up in the circuit of heat transfer during 2 min, and then a circulation of water was set up and maintain until the end of the process. The temperature of the crucible was thus stabilized at 25°C and maintained at this value until the end of the process.

Then, the radiofrequency generator was started at a power of 180 W and hydrogen (H₂) as additional reactive gas was introduced into the enclosure at a flow rate of 50 mL/min during 2 min. A non-equilibrium plasma flow was thus generated comprising reactive species (generated from argon (Ar)) and additional reactive species (generated from the hydrogen (H₂)).

After 2 min the tantalum oxide (Ta₂O₅) powder was covered with tantalum (under its metal form), the reduction being performed thanks to the additional reactive species generated from hydrogen (H₂). At the end of the process, a mixture of 87% by weight of tantalum oxide (Ta₂O₅) and 13% by weight of tantalum metal (Ta°) over the total weight of the mixture was obtained in the crucible. The powder of tantalum oxide (Ta₂O₅) initially white turned dark grey due to the formation of tantalum metal in a larger amount than in example 4.

Examples 4 and 5 allows to show that the process of treating the composition performed using a crucible which may be heated or cooled, may advantageously applied to thermal sensitive compounds. In the process of reduction of tantalum oxide (Ta₂O₅) to form tantalum metal (Ta°), which is thermal sensitive, the yield was improved by cooling the crucible.

### Example 6

The plasma generator used in this example is a radiofrequency generator which operates at a frequency of 4.5 MHz and with an electric power ranging from 24 to 60 kW to generate a plasma discharge ranging from 12 to 30 kW.

The induction generator functions at a frequency ranging from 15-35 kHz and is able to provide a power ranging from 1 kW to 6 kW.

A composition comprising 3g of dielectrics from recycling capacitors was placed on a crucible. The composition contains 14.37% by weight of oxygen (O), 2.38% by weight of carbon (C), 64.13% by weight of tantalum (Ta), 19.04% by weight of manganese (Mn) and 0.08 % by weight of impurities over the total weight of the composition (determined by electron microscopy/energy dispersive X-ray spectroscopy (SEM/EDX)).

The vacuum pump was started to reduce the pressure within the enclosure and argon (Ar) as inert gas was introduced into the enclosure with a flow rate of 3000 L/min.

Then the radiofrequency generator was started at a power of 36 kW and the argon flow rate was increased to 50 L/min and the pressure at this stage was of 1 bar. Under these conditions, a thermal plasma having a power of 18 kW was formed and the temperature of the carbon crucible was measured by a pyrometer at 1210°C.

The electromagnetic induction generator was started at a power of 2 kW to heat the crucible which was also heated by the thermal plasma. The resulting temperature of the crucible, and thus of the composition was then of 1400°C.

The high temperature of the thermal plasma allowed to extract manganese (under the form of Mn° + MnO₂) which was captured in a solid form by the carbon felt.

A flow of 250 ml/min of hydrogen as reactive gas was then injected into the enclosure allowing to reduce tantalum oxide (Ta₂O₅) into tantalum (Ta). At the end of the process, 1.9g of tantalum (Ta) was obtained in the crucible with a purity of 99% (analyzed by SEM/EDX), and carbon and oxygen were eliminated under CH₄ and gaseous H₂O forms.

## Claims

1. A process for treating, with a plasma, a composition comprising at least a first compound and a second compound, **characterized in that** said process comprises at least:
- generating, within an enclosure, a non-equilibrium plasma flow from a gas present in said enclosure by maintaining the pressure within the enclosure below 10 000 Pa, and
- treating the composition contained in said enclosure with said non-equilibrium plasma flow so as to extract at least a portion of said first compound,
wherein the extracted first compound is in a gaseous state and is captured in a liquid or solid state in a carbon felt traversed by the non-equilibrium plasma flow comprising said extracted first compound,
wherein the temperature of the carbon felt is lower than the condensation point or lower than the solidification point of the first compound.

2. The process according to claim 1, **characterized in that** the first compound is an impurity or a compound of interest.

3. The process according to claim 1 or 2, **characterized in that** the non-equilibrium plasma flow comprises at least one reactive species, the first compound being extracted in its initial form or in the form of one of its derivatives by the reaction of said first compound with said at least one reactive species or with the second compound.

4. A reactor (1) for performing the process according to anyone of claims 1 to 3, **characterized in that** it comprises:
- an enclosure (2) containing the composition (20),
- a generation device (26) configured to generate a non-equilibrium plasma flow from a gas present within said enclosure so that said plasma gas flow comes into contact with the composition (20) with a view to treating said composition,
- one or more controlling devices (12, 12'; 4, 6', 8') configured to control one or more operating parameters of the reactor so as to maintain the plasma flow at said non-equilibrium state, one of the controlling device being a pressure regulating device (12, 12'; 4, 6', 8') configured to maintain the pressure within the enclosure below 10 000 Pa, and
- a carbon felt (24) configured to capture at least one compound or one of its derivatives, extracted from the composition (20) by the non-equilibrium plasma flow.

5. The reactor of claim 4, **characterized in that** the composition (20) is placed on a support (18), the reactor comprising a temperature regulating device (26) configured to regulate the temperature of said composition by controlling the temperature of said support.

6. The reactor according to anyone of claims 4 or 5, **characterized in that** the enclosure (2) comprises a first opening (4) that is in communication with a first controlling device (6', 8') configured to introduce gas into said enclosure.

7. The reactor according to anyone of claims 4 to 6, **characterized in that** the enclosure comprises a second opening (10) that is in communication with a second controlling device (12) configured to create a depression in the enclosure through said second opening.

8. The reactor according to claims 6 and 7 when depending on claim 5, **characterized in that** the non-equilibrium plasma flow circulates between the first and the second openings (4, 10) under the action of the depression created through the second opening, the support (18) being located between the first and the second openings.

9. The reactor according to claim 7 when depending on claims 5 **characterized in that** the carbon felt (24) is placed between the support (18) for the composition and the second opening (10).

10. A process for capturing at least one compound, **characterized in that** it comprises:
- generating a non-equilibrium plasma flow comprising said at least one compound in a gaseous state, the generated non-equilibrium plasma flow being obtained at a pressure maintained below 10 000 Pa,
- capturing said at least one compound through a carbon felt (24) crossed by said non-equilibrium plasma flow, the temperature of said carbon felt being at a temperature T1 at which said compound is in a liquid or solid state, and
- recovering said at least one compound from the carbon felt (24) by rinsing said carbon felt or destructing said carbon felt.

11. The process of claim 10, **characterized in that** the at least one compound is a metal or one of its derivatives.

12. The process according to anyone of claims 10 or 11, **characterized in that** the generated plasma flow is obtained by treating a composition (20) comprising at least a first compound and a second compound with a plasma flow.

## Patentansprüche

1. Verfahren zum Behandeln, mit einem Plasma, einer Zusammensetzung, umfassend mindestens eine erste Verbindung und eine zweite Verbindung umfasst, **dadurch gekennzeichnet, dass** das Verfahren mindestens Folgendes umfasst:
- Erzeugen, innerhalb einer Kammer, eines Nichtgleichgewicht-Plasmastroms aus einem Gas, das in der Kammer vorhanden ist, indem der Druck innerhalb der Kammer unter 10.000 Pa gehalten wird, und
- Behandeln der in der Kammer enthaltenen Zusammensetzung mit dem Nichtgleichgewicht-Plasmastrom, um mindestens einen Teil der ersten Verbindung zu extrahieren,
wobei die extrahierte erste Verbindung in einem gasförmigen Zustand ist und in einem flüssigen oder festen Zustand in einem Kohlenstofffilz eingefangen wird, der von dem Nichtgleichgewicht-Plasmastrom durchströmt wird, der die extrahierte erste Verbindung umfasst,
wobei die Temperatur des Kohlenstofffilzes niedriger als der Kondensationspunkt oder niedriger als der Erstarrungspunkt der ersten Verbindung ist.

2. Verfahren nach Anspruch 1, **dadurch gekennzeichnet, dass** die erste Verbindung eine Verunreinigung oder eine Verbindung von Interesse ist.

3. Verfahren nach Anspruch 1 oder 2, **dadurch gekennzeichnet, dass** der Nichtgleichgewicht-Plasmastrom mindestens eine reaktive Spezies umfasst, wobei die erste Verbindung durch die Reaktion der ersten Verbindung mit der mindestens einen reaktiven Spezies oder mit der zweiten Verbindung in ihrer ursprünglichen Form oder in Form eines ihrer Derivate extrahiert wird.

4. Reaktor (1) zum Durchführen des Verfahrens nach einem der Ansprüche 1 bis 3, **dadurch gekennzeichnet, dass** er Folgendes umfasst:
- eine Kammer (2), die die Zusammensetzung (20) enthält,
- eine Erzeugungsvorrichtung (26), die konfiguriert ist, um aus einem in der Kammer vorhandenen Gas einen Nichtgleichgewicht-Plasmastrom zu erzeugen, sodass der Plasmagasstrom hinsichtlich einer Behandlung der Zusammensetzung mit der Zusammensetzung (20) in Kontakt kommt,
- eine oder mehrere Steuervorrichtungen (12, 12'; 4, 6', 8'), die konfiguriert sind, um einen oder mehrere Betriebsparameter des Reaktors zu steuern, um den Plasmastrom in dem Nichtgeichgewichtszustand zu halten, wobei eine der Steuervorrichtungen eine Druckregulierungsvorrichtung (12, 12'; 4, 6', 8') ist, die konfiguriert ist, um den Druck innerhalb der Kammer unter 10.000 Pa zu halten, und
- einen Kohlenstofffilz (24), der konfiguriert ist, um mindestens eine Verbindung oder eines ihrer Derivate einzufangen, die aus der Zusammensetzung (20) durch den Nichtgleichgewicht-Plasmastrom extrahiert wird.

5. Reaktor nach Anspruch 4, **dadurch gekennzeichnet, dass** die Zusammensetzung (20) auf einem Träger (18) platziert ist, wobei der Reaktor eine Temperaturregulierungsvorrichtung (26) umfasst, die konfiguriert ist, um die Temperatur der Zusammensetzung durch Steuern der Temperatur des Trägers zu regulieren.

6. Reaktor nach einem der Ansprüche 4 oder 5, **dadurch gekennzeichnet, dass** die Kammer (2) eine erste Öffnung (4) umfasst, die mit einer ersten Steuervorrichtung (6', 8') in Verbindung ist, die zum Einleiten von Gas in die Kammer konfiguriert ist.

7. Reaktor nach einem der Ansprüche 4 bis 6, **dadurch gekennzeichnet, dass** die Kammer eine zweite Öffnung (10) umfasst, die mit einer zweiten Steuervorrichtung (12) in Verbindung ist, die zum Schaffen eines Unterdrucks in der Kammer konfiguriert ist.

8. Reaktor nach Anspruch 6 und 7, wenn abhängig von Anspruch 5, **dadurch gekennzeichnet, dass** der Nichtgleichgewicht-Plasmastrom zwischen der ersten und der zweiten Öffnung (4, 10) unter der Wirkung des durch die zweite Öffnung geschaffenen Unterdrucks zirkuliert, wobei sich der Träger (18) zwischen der ersten und der zweiten Öffnung befindet.

9. Reaktor nach Anspruch 7, wenn abhängig von Anspruch 5, **dadurch gekennzeichnet, dass** der Kohlenstofffilz (24) zwischen dem Träger (18) für die Zusammensetzung und der zweiten Öffnung (10) platziert ist.

10. Verfahren zum Einfangen mindestens einer Verbindung, **dadurch gekennzeichnet, dass** es Folgendes umfasst:
- Erzeugen eines Nichtgleichgewicht-Plasmastroms, umfassend die mindestens eine Verbindung in gasförmigem Zustand, wobei der erzeugte Nichtgleichgewicht-Plasmastrom bei einem Druck erlangt wird, der unter 10.000 Pa gehalten wird,
- Einfangen der mindestens einen Verbindung durch einen Kohlenstofffilz (24), der von dem Nichtgleichgewicht-Plasmastrom durchquert wird, wobei die Temperatur des Kohlenstofffilzes eine Temperatur T1 aufweist, bei der die Verbindung in einem flüssigen oder festen Zustand ist, und
- Rückgewinnen der mindestens einen Verbindung aus dem Kohlenstofffilz (24) durch Spülen des Kohlenstofffilzes oder Zerstören des Kohlenstofffilzes.

11. Verfahren nach Anspruch 10, **dadurch gekennzeichnet, dass** die mindestens eine Verbindung ein Metall oder eines seiner Derivate ist.

12. Verfahren nach einem der Ansprüche 10 oder 11, **dadurch gekennzeichnet, dass** der erzeugte Plasmastrom durch Behandeln einer Zusammensetzung (20), die mindestens eine erste Verbindung und eine zweite Verbindung umfasst, mit einem Plasmastrom erlangt wird.

## Revendications

1. Procédé de traitement, par un plasma, d'une composition comprenant au moins un premier composé et un deuxième composé, **caractérisé en ce que** ledit procédé comprend au moins :
- la génération, à l'intérieur d'une enceinte, d'un flux de plasma non à l'équilibre à partir d'un gaz présent dans ladite enceinte en maintenant la pression à l'intérieur de l'enceinte au-dessous de 10 000 Pa, et
- le traitement de la composition contenue dans ladite enceinte avec ledit flux de plasma non à l'équilibre de manière à extraire au moins une partie dudit premier composé,
dans lequel le premier composé extrait est à l'état gazeux et est capturé à l'état liquide ou solide dans un feutre de carbone traversé par le flux de plasma non à l'équilibre comprenant ledit premier composé extrait,
dans lequel la température du feutre de carbone est inférieure au point de condensation ou inférieure au point de solidification du premier composé.

2. Procédé selon la revendication 1, **caractérisé en ce que** le premier composé est une impureté ou un composé d'intérêt.

3. Procédé selon la revendication 1 ou 2, **caractérisé en ce que** le flux de plasma non à l'équilibre comprend au moins une espèce réactive, le premier composé étant extrait sous sa forme initiale ou sous la forme de l'un de ses dérivés par réaction dudit premier composé avec ladite au moins une espèce réactive ou avec le deuxième composé.

4. Réacteur (1) pour la mise en œuvre du procédé selon l'une quelconque des revendications 1 à 3, **caractérisé en ce qu'**il comprend :
- une enceinte (2) contenant la composition (20),
- un dispositif de génération (26) configuré pour générer un flux de plasma non à l'équilibre à partir d'un gaz présent à l'intérieur de ladite enceinte de sorte que ledit flux de gaz plasma entre en contact avec la composition (20) en vue de traiter ladite composition,
- un ou plusieurs dispositifs de commande (12, 12' ; 4, 6', 8') configurés pour réguler un ou plusieurs paramètres de fonctionnement du réacteur de façon à maintenir le flux de plasma audit état de non-équilibre, l'un des dispositifs de commande étant un dispositif de régulation de pression (12, 12' ; 4, 6', 8') configuré pour maintenir la pression à l'intérieur de l'enceinte au-dessous de 10 000 Pa, et
- un feutre de carbone (24) configuré pour capturer au moins un composé ou l'un de ses dérivés, extrait de la composition (20) par le flux de plasma non à l'équilibre.

5. Réacteur selon la revendication 4, **caractérisé en ce que** la composition (20) est placée sur un support (18), le réacteur comprenant un dispositif de régulation de température (26) configuré pour réguler la température de ladite composition en régulant la température dudit support.

6. Réacteur selon l'une quelconque des revendications 4 ou 5, **caractérisé en ce que** l'enceinte (2) comprend une première ouverture (4) qui est en communication avec un premier dispositif de commande (6', 8') configuré pour introduire un gaz dans ladite enceinte.

7. Réacteur selon l'une quelconque des revendications 4 à 6, **caractérisé en ce que** l'enceinte comprend une deuxième ouverture (10) qui est en communication avec un deuxième dispositif de commande (12) configuré pour créer une dépression dans l'enceinte à travers ladite deuxième ouverture.

8. Réacteur selon les revendications 6 et 7 dépendantes de la revendication 5, **caractérisé en ce que** le flux de plasma non à l'équilibre circule entre les première et deuxième ouvertures (4, 10) sous l'action de la dépression créée à travers la deuxième ouverture, le support (18) étant situé entre les première et deuxième ouvertures.

9. Réacteur selon la revendication 7 dépendante de la revendication 5 **caractérisé en ce que** le feutre de carbone (24) est placé entre le support (18) de la composition et la deuxième ouverture (10).

10. Procédé de capture d'au moins un composé, **caractérisé en ce qu'**il comprend :
- la génération d'un flux de plasma non à l'équilibre comprenant ledit au moins un composé à l'état gazeux, le flux de plasma non à l'équilibre généré étant obtenu à une pression maintenue au-dessous de 10 000 Pa,
- la capture dudit au moins un composé à travers un feutre de carbone (24) traversé par ledit flux de plasma non à l'équilibre, la température dudit feutre de carbone étant à une température T1 à laquelle ledit composé est à l'état liquide ou solide, et
- la récupération dudit au moins un composé du feutre de carbone (24) par rinçage dudit feutre de carbone ou destruction dudit feutre de carbone.

11. Procédé selon la revendication 10, **caractérisé en ce que** le ou les composés sont un métal ou l'un de ses dérivés.

12. Procédé selon l'une quelconque des revendications 10 ou 11, **caractérisé en ce que** le flux de plasma généré est obtenu par traitement d'une composition (20) comprenant au moins un premier composé et un deuxième composé avec un flux de plasma.
